# EUROPÄISCHE PATENTSCHRIFT

(11) **EP 2 842 703 B1**
(45) Veröffentlichungstag und Bekanntmachung des Hinweises auf die Patenterteilung: **30.03.2016**
(21) Anmeldenummer: 14180100.1
(22) Anmeldetag: 06.08.2014
(51) Int. Cl.: B26D 7/01, B26D 7/18, B65G 47/91

(54) **Sauggreifer mit Auswerfer für Lebensmittel**
Suction gripper with ejector for food
Pince aspirante dotée de dispositif d'éjection pour produit alimentaire

(30) Priorität: 08.08.2013 DE 102013215723
(43) Veröffentlichungstag der Anmeldung: 04.03.2015
(73) Patentinhaber: Deutsches Institut für Lebensmitteltechnik e.V., 49610 Quakenbrück (DE)
(72) Erfinder: Hukelmann, Bernhard, 49610 Quakenbrück (DE)
(74) Vertreter: Taruttis, Stefan Georg

(56) Entgegenhaltungen:
- EP-A1- 1 400 324
- DE-A1-102011 012 880
- DE-A1-102011 083 498

## Beschreibung

Die vorliegende Erfindung betrifft einen Sauggreifer für Lebensmittel, der einen Auswerfer aufweist, sowie ein Verfahren zum Greifen von Lebensmitteln mit dem Schritt des Auswerfens.

Der Sauggreifer und das damit durchführbare Verfahren zeichnen sich dadurch aus, dass mittels einer Saugglocke, die mit einer Unterdruckquelle verbunden ist, ein sicheres Halten unregelmäßig geformter Lebensmittel erreicht wird und anschließend ein kontrolliertes Auswerfen des Lebensmittels vom Sauggreifer.

Der Sauggreifer eignet sich insbesondere zur Verwendung als Greifer für Wurst- oder Fleischwaren oder Käse an einer Schneidvorrichtung, z.B. einem Slicer, oder als Greifer einer Transporteinrichtung für in Scheiben geschnittene Lebensmittel, insbesondere in Scheiben geschnittene Wurst- oder Fleischwaren oder Käse, z.B. in einem Verfahren zur Herstellung verpackter Lebensmittel mit dem Schritt des Anordnens von in Scheiben geschnittenen Wurst- oder Fleischwaren oder Käse auf einem Träger, z.B. anschließend an das Schneiden in einem Slicer mit nachfolgendem Verpacken der auf einem Träger angeordneten Scheiben.

### Stand der Technik

Die US 3,880,295 A beschreibt ringförmige Ausnehmungen, zwischen denen ringförmig geschlossene scharfe Kanten hervorstehen, als Haltevorrichtung für Lebensmittel. Die Ausnehmungen sind mittels Bohrungen mit einer Unterdruckkammer verbunden. Die Ausnehmungen sind mit einer Unterdruckkammer verbunden, wobei in eine Kammer ein Stift ragt, mit dem eine die Verbindungen zur Unterdruckkammer überdeckende Platte verbunden ist, sodass bei Annäherung eines Lebensmittels an die Ausnehmungen der Stift bewegt wird und dessen Platte die Verbindungen zur Unterdruckkammer freigibt.

Die DE 10024913 A1 beschreibt für eine Schneidemaschine eine Haltevorrichtung, die mit Unterdruck beaufschlagbare Saugnäpfe aufweist.

Die US 6024392 A beschreibt einen Sauggreifer, bei dem eine elastische Saugglocke an einem Kolbenelement befestigt ist, das verschieblich in einer Bohrung gehalten ist und bei Belastung gegen einen Gegenstand in die Bohrung geschoben wird und dadurch einen Strömungsweg für Unterdruck öffnet. Beim Verschieben des Kolbenelements in Gegenrichtung wird der Strömungskanal für Unterdruck geschlossen. Weiter werden allgemein Näherungsschalter beschrieben, die bei Annäherung eines Sauggreifers an einen Gegenstand Unterdruck anliegen lassen.

Die EP 2 415 696 B1 beschreibt Sauggreifer für Lebensmittel mit einem von Druckluft angeströmten Rohrabschnitt als Unterdruckquelle, der lösbar mit einer Saugglocke verbunden ist.

Die DE 10 2011 083 498 A1 beschreibt für einen Sauggreifer für Lebensmittel einen innerhalb der Saugglocke verschieblich an einem Stößel geführten Taster, der bei Kontakt mit einem Lebensmittel aus seiner unbelasteten Stellung in die Saugglocke verschoben wird und dadurch eine am Stößel angebrachte federbelastete Schaltzunge ein Ventil steuert.

Die DE 10 2011 012 880 A1 beschreibt einen Sauggreifer mit einer Saugglocke, deren Öffnung gegen ein Lebensmittel angeordnet wird. An der Öffnung kann durch eine Membran, die den Innenquerschnitt der Saugglocke überspannt, und eine Unterdruckquelle ein Unterdruck erzeugt werden. An der Membran kann ein in unbelasteter Stellung in die Öffnung ragender Vorsprung als Ausstoßer vorgesehen sein, gegen den ein Lebensmittel anliegt und der durch Bewegen der Membran in Richtung zur Öffnung antreibbar ist.

Die EP 1 400 324 A1 zeigt einen Sauggreifer mit mehreren elastischen Saugglocken, gegen deren Öffnungen ein Lebensmittel angeordnet werden kann und an die eine Unterdruckquelle anzuschließen ist. Zwischen den Saugglocken sind Ausstoßer aus federbelasteten, in einem Rohr verschieblich geführten Schubstangen angeordnet, die bei Anordnung gegen ein Lebensmittel aus ihrer unbelasteten Stellung gegen die Federkraft verschoben werden. In der unbelasteten Stellung wird die Bewegung der Schubstangen, die durch die Federkraft belastet sind, durch einen Vorsprung innerhalb des Rohrs begrenzt.

Bekannte Haltevorrichtungen dichten Lebensmittel mittels einer Dichtungslippe oder Schneidkante ab, wobei ein vorbestimmter Unterdruck angelegt wird oder geregelt wird. Die bekannten Haltevorrichtungen sind dahingehend nachteilig, dass durch den Unterdruck an die Gummilippe oder Schneidkante gezogene Lebensmittel nicht gesteuert abzuwerfen sind.

### Aufgabe der Erfindung

Der Erfindung stellt sich daher die Aufgabe, einen verbesserten Sauggreifer bereitzustellen, mit dem das Abwerfen eines an eine Dichtungslippe oder Schneidkante gezogenen Lebensmittels ermöglicht wird. Eine bevorzugte Aufgabe liegt darin, einen Sauggreifer bereitzustellen, mit dem unregelmäßig geformte Lebensmittel, die mit oder ohne anliegenden Unterdruck mit der Dichtungslippe oder Schneidkante in Eingriff stehen, gesteuert anzusaugen und abzuwerfen sind.

### Allgemeine Beschreibung der Erfindung

Die Erfindung löst die Aufgabe mit den Merkmalen der Ansprüche und stellt insbesondere einen Sauggreifer mit einer Saugglocke bereit, deren Öffnung von einer umlaufenden Dichtungslippe und/oder Schneidkante eingefasst bzw. aufgespannt ist. Der Sauggreifer zeichnet sich dadurch aus, dass innerhalb der Saugglocke ein Anlageelement an einer ersten Führung beweglich gegen die Ebene, in der sich die Öffnung erstreckt, geführt ist, wobei an einem Abschnitt der ersten Führung zwischen dem Anlageelement und der Saugglocke, insbesondere innerhalb der Saugglocke, ein Begrenzer verschieblich angeordnet ist, der auf der ersten Führung festlegbar ist. Der Abschnitt der ersten Führung, in dem der Begrenzer angeordnet ist, liegt innerhalb der Saugglocke. Der Begrenzer ist entsprechend an einem Abschnitt der ersten Führung zwischen dem Anlageelement und einem Anschlag verschieblich und festlegbar angeordnet, der an der Saugglocke angebracht ist oder von der Saugglocke, insbesondere von deren Wandung, gebildet wird. Der Anschlag ist entsprechend in der Bewegungsbahn des Begrenzers angeordnet, die entlang der ersten Führung verläuft.

Der Begrenzer, der z.B. eine Scheibe ist, ist bevorzugt mittels einer Führungsbohrung oder mittels eines Gewindes an der ersten Führung verschieblich angeordnet und festlegbar, optional mit einer Klemmeinrichtung, und begrenzt den Weg der Bewegung des Anlageelements entlang der Saugglocke, insbesondere bis auf einen maximalen Weg aus der Ebene der Öffnung zu der Wand der Saugglocke, die der Öffnung gegenüberliegt. Bevorzugt erstreckt sich das Anlageelement in einer zur Ebene der Öffnung parallelen Ebene. Bevorzugt ist das Anlageelement etwa senkrecht zur Ebene der Öffnung verschieblich.

Alternativ zu einem entlang der ersten Führung zwischen dem Anlageelement und der Saugglocke verschieblichen und auf der ersten Führung in einer Stellung festlegbaren Begrenzer kann der Begrenzer auf der ersten Führung zwischen dem Anlageelement und der Saugglocke in der Stellung festgelegt sein, z.B. verschweißt sein, wobei die erste Führung auswechselbar ist und zumindest eine weitere Führung vorhanden ist, z.B. zumindest zwei Führungen, wobei der Begrenzer an jeder ersten Führung in jeweils unterschiedlicher Stellung entlang der ersten Führung festgelegt ist. In dieser Variante ist der Begrenzer dadurch entlang der ersten Führung in einer unterschiedlichen Stellung festlegbar, dass die erste Führung mit einem in einer Stellung festgelegten Begrenzer gegen zumindest eine weitere erste Führung austauschbar ist, auf der der Begrenzer in einer unterschiedlichen Stellung festgelegt ist. Die erste Führung mit einem festgelegten Begrenzer, die austauschbar gegen zumindest eine weitere erste Führung mit einem in einer unterschiedlichen Stellung festgelegten Begrenzer ist, und die weitere erste Führung ersetzen damit einen entlang der ersten Führung verschieblichen und in zumindest zwei unterschiedlichen Stellungen festlegbaren Begrenzer. Entsprechend kann der Sauggreifer eine erste Führung aufweisen, auf der zwischen dem Anlageelement und der Saugglocke ein verschieblicher und in einer Stellung festlegbarer Begrenzer angeordnet ist oder zumindest eine weitere erste Führung, die gegen die eine erste Führung austauschbar ist, wobei auf den ersten Führungen jeweils ein Begrenzer in einer unterschiedlichen Stellung festgelegt ist. Generell ist eine Stellung des Begrenzers insbesondere eine Position des Begrenzers entlang des Abschnitts der ersten Führung, der zwischen dem Anschlag und der Saugglocke liegt.

Das Anlageelement ist mit einem Stellantrieb verbunden, der das Anlageelement gesteuert in Richtung auf die Öffnung bewegen kann. Das Anlageelement ist bevorzugt dadurch beweglich gegen die Öffnung der Saugglocke geführt, dass es verschieblich an einer ersten Führung geführt ist, die sich z.B. etwa senkrecht zur Ebene der Öffnung der Saugglocke erstreckt. Alternativ kann das Anlageelement dadurch verschieblich sein, dass es durch die erste Führung schwenkbar geführt ist, wobei die erste Führung z.B. ein Schwenklager sein kann, dessen Schwenkachse z.B. etwa parallel zur Ebene der Öffnung der Saugglocke angeordnet ist. Der Stellantrieb kann z.B. in Abhängigkeit von einem Signal gesteuert sein, das den Abstand des Sauggreifers von einer Schneideeinheit wiedergibt, wenn der Sauggreifer als Teil einer Zuführeinrichtung für Lebensmittel an einer Schneidemaschine angebracht ist. Bevorzugt ist der Sauggreifer daher mit einer Einrichtung verbunden, die ein Signal für den Abstand zwischen der Schneideeinheit und dem Sauggreifer, insbesondere dessen Kante der Saugglocke erzeugt. Eine solche Einrichtung kann eine Messeinrichtung sein oder Teil der Steuereinrichtung einer Schneidvorrichtung, die z.B. den Vorschub des Sauggreifers gegen die Schneideeinheit steuert.

Das Anlageelement dient dazu, ein Lebensmittel, das mit der die Öffnung aufspannenden Kante, die insbesondere eine Schneidkante und/oder Dichtlippe ist, in Eingriff steht, aus der Saugglocke zu schieben, insbesondere wenn das Lebensmittel mit einer um die Öffnung umlaufenden Schneidkante zur Abdichtung der Öffnung durch das Lebensmittel verklemmt ist. Die gesteuerte Verschieblichkeit des Anlageelements in Richtung auf die Ebene der Öffnung mittels des Stellantriebs ist z.B. vorteilhaft gegen Ende eines Verfahrens zum Schneiden eines an dem Sauggreifer gehaltenen Lebensmittels, da durch den Stellantrieb auch der Anteil des Lebensmittels, der innerhalb der Saugglocke angeordnet ist, mit dem Anlageelement aus der Saugglocke, bevorzugt gegen eine Schneideeinrichtung, bewegt werden kann. Bevorzugt weist das Anlageelement auf der dem Lebensmittel zugewandten Oberfläche eine Struktur auf, die mit dem Lebensmittel in Eingriff tritt, um das Lebensmittel während des Schneidens, das mittels der Schneideinheit erfolgt, besser zu halten. Eine solche Struktur kann z.B. Vorsprünge aufweisen, insbesondere Stifte oder Grate.

In der unbelasteten Stellung ist das Anlageelement generell bevorzugt etwa in der Ebene der Öffnung angeordnet, die gegen ein Lebensmittel anzuordnen ist und von der Kante der Saugglocke, bevorzugt einer umlaufenden Schneidkante und/oder Dichtlippe gebildet wird. Dabei kann die Anlagefläche des Anlageelements, die gegen ein Lebensmittel anzuordnen ist und auf der der ersten Führung gegenüberliegenden Seite des Anlageelements und/oder auf der dem Innenvolumen der Saugglocke gegenüberliegenden Seite des Anlageelements angeordnet ist, im unbelasteten Zustand in der Ebene der Öffnung angeordnet sein, die in der Ebene der Öffnung liegt oder dazu versetzt sein, z.B. um 1 bis 15 mm, insbesondere um 1 bis 15 mm über die Öffnung vorstehen oder innerhalb der Saugglocke von der Öffnung beabstandet sein. Die unbelastete Stellung kann auch als unbelastete Endstellung bezeichnet werden.

Die erste Führung kann optional mit einer Feststelleinrichtung versehen sein, die die erste Führung in einer Stellung relativ zur Saugglocke festlegt, insbesondere in einer Stellung relativ zur Wandung der Saugglocke oder relativ zu ihrer Öffnung. Eine Feststelleinrichtung kann gesteuert reversibel kraftschlüssig mit der ersten Führung in Eingriff treten, z.B. als Klemmeinrichtung ausgebildet sein, die auf die erste Führung wirkt. Alternativ kann eine Feststelleinrichtung reversibel formschlüssig mit der ersten Führung in Eingriff treten, z.B. als Rasteinrichtung ausgebildet sein, die mit der ersten Führung in zumindest einer vorbestimmten Stellung in Eingriff tritt. Bevorzugt ist eine Feststelleinrichtung in Abhängigkeit von einem Drucksensor gesteuert, der eingerichtet ist, den Unterdruck in der Saugglocke zu messen. Z.B. kann die Feststelleinrichtung so in Abhängigkeit von einem Drucksensor gesteuert sein, dass sie die erste Führung bei Erreichen eines vorbestimmten Unterdrucks festlegt.

Optional zusätzlich kann der Sauggreifer ein Abblasrohr aufweisen, das sich durch die Saugglocke erstreckt, dessen Eintrittsöffnung außerhalb der Saugglocke liegt und mit einer gesteuerten Druckluftquelle verbindbar ist und dessen Austrittsöffnung innerhalb der Saugglocke angeordnet ist. Die Austrittsöffnung des Abblasrohrs kann z.B. etwa in der Ebene angeordnet sein, in der sich die Öffnung erstreckt. Bevorzugt ist die Austrittsöffnung des Abblasrohrs mit dem Anlageelement verbunden und mit dem Anlageelement gegen die Saugglocke verschieblich, z.B. indem ein Abschnitt des Abblasrohrs flexibel oder als Teleskoprohr ausgebildet ist. Die Austrittsöffnung des Abblasrohrs kann z.B. in der Ebene des Anlageelements oder um bis zu 5mm, bevorzugt bis zu 2mm oder bis 1 mm in Richtung auf das zweite Ende der Saugglocke von der Anlagefläche des Anlageelements versetzt sein. Bevorzugt weist das Abblasrohr ein Ventil auf, das die Verbindung der Druckluftquelle mit der Austrittsöffnung gesteuert herstellt, z.B. bei Positionierung des Anlageelements annähernd an oder in der Ebene der Öffnung der Saugglocke. Das Abblasrohr kann zwei oder mehr Austrittsöffnungen aufweisen.

Optional ist der Sauggreifer eingerichtet, dass die Unterdruckquelle während des Verschiebens des Anlageelements, das insbesondere durch den Betrieb des Stellantriebs bewirkt ist, Unterdruck in der Saugglocke erzeugt. Dazu kann die Unterdruckquelle abhängig von der Stellung des Anlageelements gesteuert sein, insbesondere abhängig von einem Signal eines Schalters. Dies ist vorteilhaft, insbesondere in Ausführungsformen, in denen das Anlageelement Durchbrechungen aufweist, um das Lebensmittel noch zumindest während eines Anteils der Verschiebung des Anlageelements in Richtung auf die Ebene der Öffnung zu halten.

Der Stellantrieb kann ein elektromotorischer oder hydraulischer Antrieb sein, insbesondere ein mit Druckluft angetriebener Kolben, der in einem Zylinder geführt ist. Bevorzugt ist der Stellantrieb mit der ersten Führung verbunden, z.B. mit einem seiner Enden mit der ersten Führung und dem anderen Ende mit der Saugglocke, z.B. mittels eines mit der Saugglocke verbundenen Trägers. Der Träger kann z.B. ein Gehäuse sein, das mit der Saugglocke verbunden ist. Ein Stellantrieb mit einem mit Druckluft angetriebenen Kolben, der mit der ersten Führung verbunden ist, ist bevorzugt in einem Zylinder geführt, der mit der Saugglocke verbunden ist, z.B. an einem mit der Saugglocke verbundenen Träger montiert. Generell ist der Stellantrieb bevorzugt eingerichtet, das Anlageelement gegen die Ebene der Öffnung der Saugglocke zu bewegen, insbesondere bis die dem Lebensmittel zugewandte Oberfläche bzw. die das Lebensmittel kontaktierende Oberfläche des Anlageelements bis maximal in die Ebene der Öffnung bewegt ist. Auf diese Weise kann der Anteil des Lebensmittels, der nicht von der Schneideinrichtung geschnitten wird, sondern innerhalb der Saugglocke verbleibt, minimiert werden. Alternativ kann der Stellantrieb eine Feder sein, insbesondere eine Druckfeder, bevorzugt in Kombination mit einer gesteuerten Feststelleinrichtung.

Der Stellantrieb kann optional eine zweite Führung bilden oder auf die erste Führung wirken bzw. mit der ersten Führung gekoppelt sein. Der Stellantrieb kann eine zweite Führung aufweisen, die parallel zur ersten Führung angeordnet ist. Optional ist der Stellantrieb koaxial zur ersten Führung angeordnet und/oder wirkt parallel zur ersten Führung. Optional ist der Stellantrieb zwischen Saugglocke und Anlageelement angeordnet oder außerhalb der Saugglocke, z.B. in einem an die Saugglocke angrenzenden Abschnitt des Sauggreifers.

Generell bevorzugt ist der Sauggreifer auf einfache Weise zu zerlegen und zu reinigen. Dazu kann die Saugglocke lösbar mit einem Träger verbunden sein, z.B. mittels eines Gewindes oder Bajonettverschlusses. Das Anlageelement und der Begrenzer sind bevorzugt lösbar mit der ersten Führung verbunden, z.B. mittels eines Gewindes oder Bajonettverschlusses. Bevorzugt weist die Vakuumquelle ein an der Saugglocke lösbar angeordnetes oder mit der Saugglocke verbundenes Rohrstück auf, dessen Einlassende an einer ringförmigen Auslassöffnung für Druckluft angeordnet ist und eine gekrümmte Innenfläche aufweist und als Venturirohr wirkt und bei Anströmung des Einlassendes mit Druckluft aus der ringförmigen Auslassöffnung am Einlassende Unterdruck erzeugt. Solche Rohrstücke sind als Förderejektoren bekannt und z.B. in der EP 2 415 696 B1 als Teil eines Sauggreifers beschrieben. Das Einlassende ist mit der Saugglocke verbunden und bildet bevorzugt einen Wandabschnitt der Saugglocke, z.B. gegenüber deren Öffnung.

Bevorzugt ist der Träger ein Gehäuse, in dem die erste Führung geführt ist und optional der Stellantrieb angeordnet ist.

Optional weist der Sauggreifer einen Schalter auf, der abhängig von der Bewegung des Anlageelements von der Öffnung, insbesondere bei Belastung des Anlageelements durch ein dagegen angeordnetes Lebensmittel, betätigt wird. Der Schalter kann ein Signal erzeugen, von dem abhängig z.B. der Stellantrieb und/oder die Unterdruckquelle gesteuert ist.

Der Schalter kann ein Kontaktschalter sein, der bei Anlage des Begrenzers bzw. Belastung durch den Begrenzer betätigt wird. In dieser Ausführung ist der Schalter in einer Stellung angeordnet, die in der Bewegungsbahn des Begrenzers liegt und insbesondere der Schalter einen Anschlag für den Begrenzer bildet, z.B. in der unbelasteten Stellung des Anlageelements oder in der Stellung, in der das Anlageelement maximal von der Ebene der Öffnung weg bewegt ist.

Alternativ oder zusätzlich kann der Schalter als Verschlußstück ausgebildet sein, das in einer Kammer verschieblich geführt ist, die auf einer Seite des Verschlußstücks an einem zweiten Einlass mit Druckluft beaufschlagbar ist und in einem Abstand dazu einen zweiten Auslass aufweist, der in einer Endlage des Verschlußstücks von diesem verschlossen wird. Das Verschlußstück überdeckt den Querschnitt der Kammer nicht vollständig, sondern läßt einen Strömungsweg vom zweiten Einlass zum zweiten Auslass in Stellungen, in denen das Verschlußstück den zweiten Auslass nicht verschließt. Bevorzugt weist die Kammer einen zweiten Einlass in dem Abschnitt auf, der dem Verschlußstück zugewandt ist, wenn das Verschlußstück den zweiten Auslass verschließt, so dass bei Stellung des Verschlußstücks in einem Abstand vom zweiten Auslass Druckluft am Verschlußstück vorbei und durch den zweiten Auslass ausströmen kann. Bei Beaufschlagung des vom zweiten Einlass gebildeten Druckluftanschlusses der Kammer mit Druckluft strömt in der Stellung, in der das Verschlußstück den zweiten Auslass nicht verschließt, durch den zweiten Auslass, insbesondere bei Belastung des Anlageelements durch ein dagegen angeordnetes Lebensmittel. In der Stellung, in der das Verschlußstück den zweiten Auslass verschließt, die bevorzugt die Endstellung des Anlageelements im unbelasteten Zustand ist, wird die Druckluft, mit der die Kammer beaufschlagt ist, in der Kammer zurückgehalten und strömt nicht aus dem zweiten Auslass. Das von einem Schalter einer dieser Ausführungen abhängig von der Stellung des Anlageelements erzeugte Signal ist daher z.B. das Ausströmen von Druckluft aus dem zweiten Auslass bzw. der Druckverlust am zweiten Einlass, bzw. das Fehlen von Druckluft, die aus dem zweiten Auslass ausströmt bzw. der gleichbleibende Druck am zweiten Einlass.

In einer Variante eines Schalters mit Verschlußstück verschließt das Verschlußstück den Querschnitt der Kammer und bildet einen zweiten Kolben, der in der Kammer als zweitem Zylinder verschieblich ist. In dieser Variante sind zweiter Einlass und zweiter Auslass in einem Abstand innerhalb der Kammer angeordnet, über den sich das Verschlußstück bewegt, insbesondere in einem Abstand kleiner als die Bewegungsbahn des Verschlußstücks, so dass das Verschlußstück bei Bewegung von der unbelasteten Endstellung des Anlageelements in dessen maximal von der Ebene der Öffnung beabstandete Stellung eine von zweitem Einlass und zweitem Auslass überstreicht und zwischen zweiten Einlass und zweiten Auslass verschoben wird, um den Strömungsweg vom zweiten Einlass vom zweiten Auslass zu trennen.

Das Anlageelement kann innerhalb und/oder außerhalb der Saugglocke angeordnet sein und weist bevorzugt eine dem Innenraum der Saugglocke abgewandte Anlagefläche für Lebensmittel auf, die im Wesentlichen in einer Ebene angeordnet ist, wobei die Ebene bevorzugt parallel zu der Ebene ist, in der die Öffnung aufgespannt ist. Bevorzugt überdeckt das Anlageelement zumindest das Zentrum der Saugglocke, bevorzugter erstreckt sich das Anlageelement über zumindest 50%, noch bevorzugter 75% oder 90% des Durchmessers der Saugglocke. Das Anlageelement kann Durchbrechungen aufweisen, durch die an der Saugglocke anliegender Unterdruck in die Ebene der Öffnung wirken kann. Durchbrechungen des Anlageelements können als Bohrungen ausgeführt sein, optional kann das Anlageelement als Gitter, insbesondere als Stangengitter ausgebildet sein.

Die Erfindung wird nun genauer mit Bezug auf die Figuren beschrieben, die schematisch in
- Figur 1 eine Ausführungsform des Sauggreifers im Schnitt,
- Figur 2 eine Ausführungsform mit Feststelleinrichtung im Schnitt,
- Figur 3 eine weitere Ausführungsform des Sauggreifers im Schnitt und
- Figur 4 eine Ausführungsform mit Feststelleinrichtung im Schnitt zeigen.

In den Figuren bezeichnen gleiche Bezugsziffern funktionsgleiche Elemente.

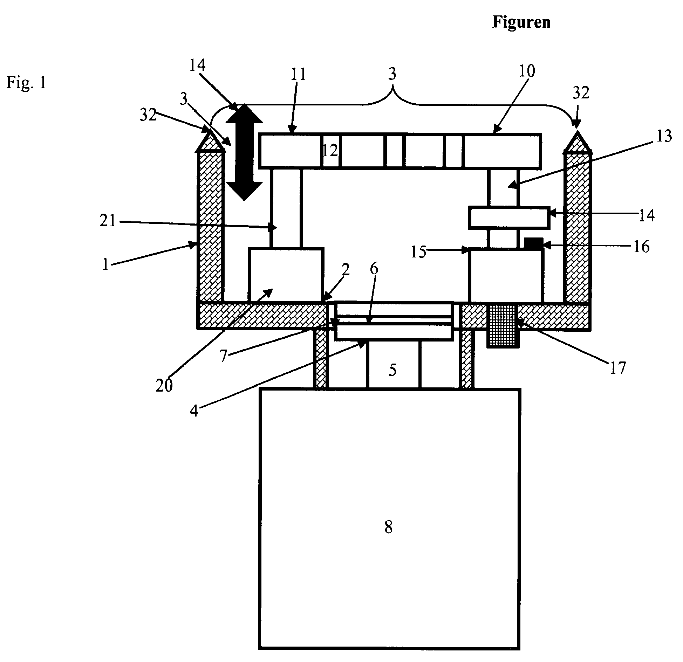

Die Figur 1 zeigt einen Sauggreifer mit einer Saugglocke 1, die einen runden Querschnitt hat und in deren Wand 2, die ihrer Öffnung 3 gegenüber liegt, eine Unterdruckquelle 4 angeordnet ist. Die Öffnung 3 weist eine umlaufende Schneidkante auf. Die Unterdruckquelle 4 wird von einem Rohrstück 5 gebildet, dessen Einlassende 6, das eine gewölbte Innenfläche aufweist, in einem ringförmigen Spalt 7 mit Druckluft beaufschlagt wird und daher als Venturidüse am Einlassende 6 Unterdruck erzeugt, der in die Saugglocke 1 wirkt.

Figur 1 zeigt das Anlageelement 10 in unbelasteter Endstellung, etwa in der Ebene der Öffnung 3.

Das dem Einlassende 6 gegenüberliegende Auslassende des Rohrstücks 5 ist von einem Abluftgehäuse 8 überdeckt, das die aus dem Rohrstück 5 austretende Abluft von der Saugglocke 1 ableitet oder das, wie generell bevorzugt, die Abluft auf die Saugglocke 1 und in Richtung auf die Ebene der Öffnung 3 umlenkt.

Das Anlageelement 10 weist eine Anlagefläche 11 auf, die in einer Ebene angeordnet ist, die parallel zu der Ebene liegt, in der sich die Öffnung 3 erstreckt. Das Anlageelement 10 weist Durchbrechungen 12 zum Durchtritt angesaugter Luft in die Saugglocke 1 auf. Das Anlageelement 10 ist an einer ersten Führung 13, die eine Führungsstange aufweist, in einer Richtung senkrecht zur Ebene der Öffnung 3 beweglich, wie durch den Doppelpfeil angedeutet wird. Die erste Führung 13 weist einen Begrenzer 14 auf, dessen Stellung zwischen dem Anlageelement 10 und der Saugglocke 1, bzw. dem in der Saugglocke 1 angeordneten Anschlag 15 auf der ersten Führung 13 verschieblich ist und in einer gewünschten Stellung festlegbar ist. Der Begrenzer 14 ist z.B. als Rändelmutter ausgebildet, die auf der ersten Führung 13 festklemmbar ist und dient der Begrenzung der maximalen Bewegung des Anlageelements 10 in die Saugglocke 1. Die erste Führung 13 ist in einem Lager 17, das an der Saugglocke 1 angebracht ist, längsverschieblich geführt.

Am Anschlag 15 ist ein Schalter 16 angeordnet, der in der Bewegungsbahn des Begrenzers 14 angeordnet ist und bei Bewegung des Begrenzers 14 von der Öffnung 3 weg und gegen die Wand 2 bzw. gegen den Anschlag 15 betätigt wird. Der Schalter 16 kann ein Näherungsschalter oder ein Schaltkontakt sein. Das durch Betätigung bei Anliegen des Begrenzers 14 und/oder das durch Nichtbetätigung bei Abstand des Begrenzers 14 ausgelöste Signal des Schalters 16 kann die Unterdruckquelle und/oder den Stellantrieb 20 steuern.

Der Stellantrieb 20 kann als Druckluftzylinder oder elektromotorisches Element ausgebildet sein und weist eine zweite Führung 21 auf, die parallel zur ersten Führung 13 verläuft. Der Stellantrieb 20 dient als Auswerfer und schiebt das Anlageelement 10 in Richtung von der Wand 2 bzw. in Richtung auf die Öffnung 3.

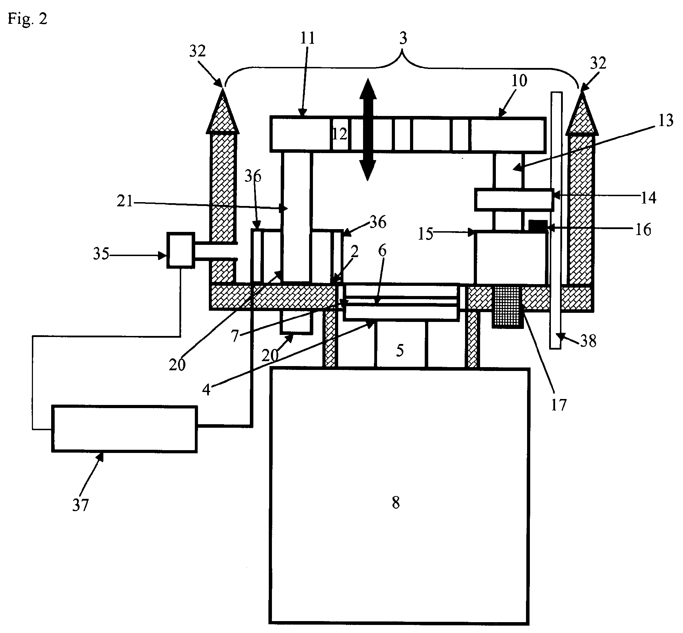

Figur 2 zeigt eine Ausführungsform, die zusätzlich zu der von Figur 1 einen Drucksensor 35 zeigt und eine vom Signal des Drucksensors 35 abhängig gesteuerte Feststelleinrichtung 36. Die Feststelleinrichtung 36 kann z.B. durch eine Steuereinrichtung 37 gesteuert sein, die ein Steuersignal abhängig vom Signal des Drucksensors erzeugt. Generell bevorzugt ist die Steuereinrichtung 37 eingerichtet, bei einem Signal für einen vorbestimmten Unterdruck die Feststelleinrichtung zu aktivieren bzw. die erste Führung 13 festzulegen. Dabei ist ein vorbestimmter Unterdruck einer, bei dem der Unterdruck zur sicheren Halten eines Lebensmittels erreicht ist, z.B. der Unterdruck, der höchstens von der Unterdruckquelle 4 erzeugbar ist.

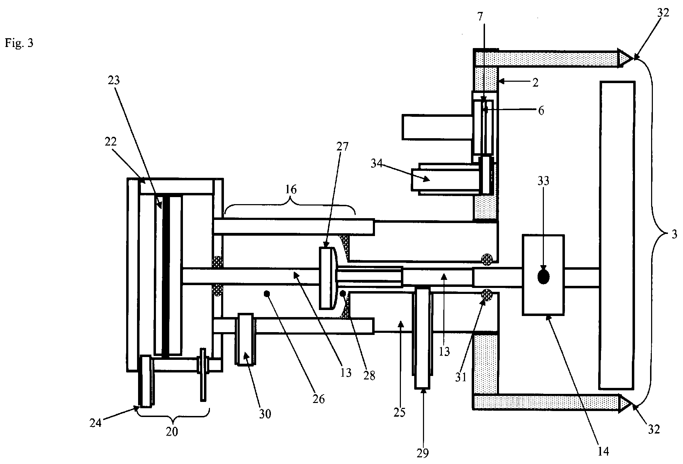

Die in Figur 3 gezeigte Ausführungsform weist als Stellantrieb 20 einen im Zylinder 22 geführten Kolben 23 auf. Der Zylinder 22 weist einen ersten Einlass 24 für Druckluft auf und einen ersten Auslass. Der Kolben 23 ist an der ersten Führung 13 angebracht, an deren in der Saugglocke 1 angeordneten Ende das Anlageelement 10 angebracht ist. Die erste Führung 13 ist als Stange ausgebildet, die in einer Bohrung eines als Gehäuse 25 ausgebildeten Trägers für die Saugglocke 1 geführt ist.

Der Zylinder 22 ist mit dem Gehäuse 25 verbunden, das am gegenüberliegenden Abschnitt die Saugglocke 1 trägt.

Ein Schalter 16 ist durch ein in der Kammer 26 angeordnetes Verschlußstück 27 gebildet, das gegen den zweiten Auslass 28 beweglich ist. Das Verschlußstück 27 ist an der ersten Führung 13 angeordnet, so dass die Bewegung der ersten Führung 13 bei Belastung des Anlageelements 10 aus der Ebene der Öffnung 3 vom zweiten Auslass 28 weg bewegt wird. Der zweite Auslass 28 ist mit dem zweiten Druckluftausgang 29 verbunden. Die Kammer 26 ist durch den zweiten Einlass 30 mit Druckluft beaufschlagbar. Der zweite Auslass 28 ist bevorzugt als Ventilsitz für das Verschlußstück 27 ausgebildet.

Zur Minderung bzw. Vermeidung des Einströmens von Druckluft aus der Kammer 26 entlang der Bohrung im Gehäuse 25 in die Saugglocke 1 ist bevorzugt eine Dichtung 31 zwischen der Führungsstange der ersten Führung 13 und deren Bohrung im Gehäuse 25 angeordnet.

Entsprechend der in Figur 1 gezeigten Ausführung ist die Unterdruckquelle als Venturirohr ausgebildet, dessen Einlassöffnung 6 einen Abschnitt der Wand 2 der Saugglocke 1 gegenüber ihrer Öffnung 3 bildet. Die Unterdruckquelle weist als Antrieb einen Druckluftanschluß 34 auf, der Druckluft zu dem schematisch gezeigten ringförmigen Spalt 7 führt. Die Öffnung 3 wird von einer umlaufenden Schneidkante 32 aufgespannt.

Als Signal dieses Schalters 16 kann das Anliegen von Druckluft am Druckluftausgang 29 und/oder ein Druckverlust am zweiten Einlass 30 der Kammer 26 gemessen werden. Der Begrenzer 14 ist zwischen dem Anlageelement 10 und der Wand 2 der Saugglocke entlang der ersten Führung 13 einstellbar und in einer der verschiedenen Stellungen festlegbar, z.B. mittels eines Gewindes auf der ersten Führung 13 einstellbar und mittels einer Klemmschraube 33 festlegbar.

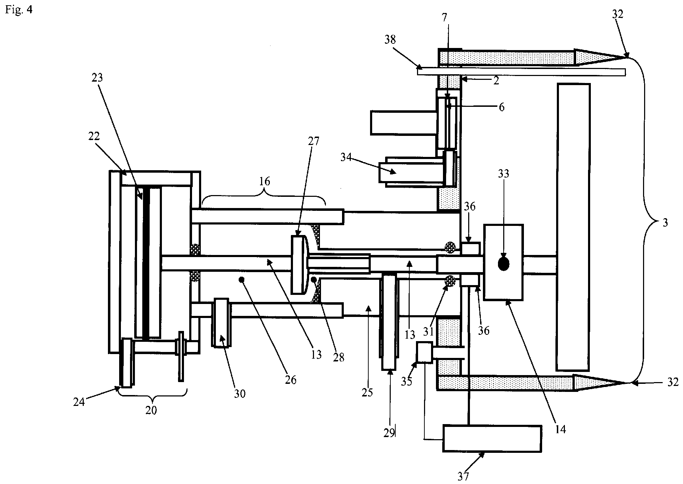

Figur 4 zeigt eine Ausführungsform, die derjenigen von Figur 3 entspricht und die optionale Feststelleinrichtung 36 aufweist, die wie bevorzugt abhängig von einem Signal für den Unterdruck gesteuert ist, das von einem Drucksensor 35 erzeugt wird, kann innerhalb der Saugglocke angeordnet sein. Wie gezeigt kann die Feststelleinrichtung optional um einen Abschnitt der ersten Führung 13 angeordnet sein, z.B. die stangenförmige erste Führung 13 abschnittsweise umfassen und Klemmelemente oder Rastelemente aufweisen, die mit der ersten Führung 13 kraftschlüssig bzw. formschlüssig in Eingriff treten können.

Die Figuren 2 und 4 zeigen jeweils ein optionales Abblasrohr 38, das sich durch die Saugglocke 1 erstreckt, dessen Eintrittsöffnung für Druckluft außerhalb der Saugglocke 1 liegt und dessen Austrittöffnung innerhalb der Saugglocke liegt, bevorzugt etwa in der Ebene der Öffnung der Saugglocke 1.

| | |
|---|---|
| Bezugszeichenliste: | 21 zweite Führung |
| 1 Saugglocke | 22 Zylinder |
| 2 Wand | 23 Kolben |
| 3 Öffnung | 24 erster Einlass |
| 4 Unterdruckquelle | 25 Gehäuse |
| 5 Rohrstück | 26 Kammer |
| 6 Einlassende | 27 Verschlußstück |
| 7 ringförmiger Spalt | 28 zweiter Auslass |
| 8 Abluftgehäuse | 29 zweiter Druckluftausgang |
| 10 Anlageelement | 30 zweiter Einlass |
| 11 Anlagefläche | 31 Dichtung |
| 12 Durchbrechungen | 32 Schneidkante |
| 13 erste Führung | 33 Klemmschraube |
| 14 Begrenzer | 34 Druckluftanschluss |
| 15 Anschlag | 35 Drucksensor |
| 16 Schalter | 36 Feststelleinrichtung |
| 17 Lager | 37 Steuereinrichtung |
| 20 Stellantrieb | 38 Abblasrohr |

## Patentansprüche

1. Sauggreifer mit einer Saugglocke (1), die eine Öffnung (3) zur Anordnung gegen ein Lebensmittel aufweist, an die eine Unterdruckquelle (4) anschließbar ist, mit einem von der Ebene der Öffnung (3) entlang der Saugglocke (1) beweglich an einer ersten Führung (13) geführten Anlageelement (10), **gekennzeichnet durch** einen entlang der ersten Führung (13) zwischen dem Anlageelement (10) und der Saugglocke (1) verschieblichen und auf der ersten Führung (13) in einer Stellung festlegbaren Begrenzer (14) und **durch** einen mit dem Anlageelement (10) verbundenen Stellantrieb (20) zur gesteuerten Bewegung des Anlageelements (10) in Richtung auf die Ebene der Öffnung (3).

2. Sauggreifer nach Anspruch 1, **dadurch gekennzeichnet, dass** der Begrenzer (14) in einer Stellung entlang der ersten Führung (13) festgelegt ist und gegen eine weitere erste Führung (13) austauschbar ist, bei der der Begrenzer (14) in einer unterschiedlichen Stellung festgelegt ist.

3. Sauggreifer nach Anspruch 1 oder 2, **dadurch gekennzeichnet, dass** er an einer Zuführeinrichtung für Lebensmittel einer Schneidemaschine mit einer Schneideeinrichtung angeordnet ist und der Stellantrieb (20) abhängig von einem Signal für den Abstand des Sauggreifers von der Schneideeinrichtung gesteuert ist.

4. Sauggreifer nach einem der voranstehenden Ansprüche, **dadurch gekennzeichnet, dass** der Stellantrieb (20) eine zur ersten Führung (13) parallele zweite Führung (21) aufweist, die das Anlageelement (10) führt.

5. Sauggreifer nach einem der voranstehenden Ansprüche, **dadurch gekennzeichnet, dass** das Anlageelement (10) eine parallel zur Ebene der Öffnung (3) angeordnete Oberfläche aufweist, die Durchbrechungen (12) aufweist oder geschlossen ist.

6. Sauggreifer nach einem der voranstehenden Ansprüche, **dadurch gekennzeichnet, dass** die erste Führung (13) ein Schwenklager oder eine mit dem Anlageelement (10) verbundene, längsverschieblich geführte Stange ist und der Stellantrieb (20) ein an der ersten Führung (13) angeordneter und in einem gesteuert mit Druckluft beaufschlagbaren Zylinder (22) geführter Kolben (23), ein elektromotorischer Antrieb oder eine Feder ist.

7. Sauggreifer nach einem der voranstehenden Ansprüche, **dadurch gekennzeichnet, dass** in der Bewegungsbahn, in der der Begrenzer (14) mit der ersten Führung (13) bei Bewegung der Saugglocke (1) geführt ist, ein Schalter (16) festgelegt ist, der eingerichtet ist, ein Schaltsignal zu erzeugen.

8. Sauggreifer nach Anspruch 7, **dadurch gekennzeichnet, dass** die Unterdruckquelle (4) abhängig von dem Schaltsignal des Schalters (16) gesteuert ist.

9. Sauggreifer nach einem der Ansprüche 7 bis 8, **dadurch gekennzeichnet, dass** die erste Führung (13) eine mit dem Anlageelement (10) verbundene, längsverschieblich geführte Stange ist und der Schalter (16) ein an der Stange angeordnetes Verschlussstück (27) ist, das in einer mit Druckluft beaufschlagbaren Kammer (26) geführt ist, die einen durch das Verschlussstück (27) verschließbaren zweiten Auslass (28) für Druckluft aufweist.

10. Sauggreifer nach Anspruch 9, **dadurch gekennzeichnet, dass** der zweite Auslass (28) in einer Stellung angeordnet ist, die vom Verschlussstück (27) in der unbelasteten Stellung des Anlageelements (10) verschlossen wird und die bei Verschiebung des Anlageelements (10) aus seiner unbelasteten Stellung vom Verschlussstück (27) freigegeben wird.

11. Sauggreifer nach Anspruch 9, **dadurch gekennzeichnet, dass** das Verschlußstück (27) den Querschnitt der Kammer (26) dicht überdeckt und der zweite Auslass (28) der Kammer (26) in deren Abschnitt angeordnet ist, der in der unbelasteten Stellung des Anlageelements (10) mit dem Einlass verbunden ist.

12. Sauggreifer nach Anspruch 11, **dadurch gekennzeichnet, dass** der Kolben (23) eine größere von Druckluft beaufschlagbare Fläche aufweist als das Verschlussstück (27).

13. Sauggreifer nach einem der voranstehenden Ansprüche, **dadurch gekennzeichnet, dass** die Öffnung (3) eine umlaufende Schneidkante (32) und/oder Dichtlippe aufweist.

14. Sauggreifer nach einem der voranstehenden Ansprüche, **dadurch gekennzeichnet, dass** die Unterdruckquelle (4) ein von Druckluft angeströmtes Ende eines Rohrabschnitts ist, das eine Wölbung aufweist.

15. Sauggreifer nach einem der voranstehenden Ansprüche, **dadurch gekennzeichnet, dass** an der ersten Führung (13) eine Feststelleinrichung (36) angeordnet ist, die von einem Signal eines Drucksensors (35) für den an der Saugglocke (1) anliegenden Unterdruck abhängig gesteuert ist.

16. Sauggreifer nach einem der voranstehenden Ansprüche, **gekennzeichnet durch** ein Abblasrohr (38), dessen Eintrittsöffnung mit einer Druckluftquelle verbindbar ist und das eine Austrittsöffnung aufweist, die innerhalb der Saugglocke (1) angeordnet ist, und ein gesteuertes Ventil.

17. Verfahren zum Halten eines Lebensmittels mittels eines Sauggreifers, **gekennzeichnet durch** die Verwendung eines Sauggreifers nach einem der voranstehenden Ansprüche.

## Claims

1. Suction gripper having a suction cup (1) which has an opening (3) for arrangement against a food, which is connectable to a low pressure source (4), having a contact element (10) moveably guided along a first guidance (13) from the level of the opening (3), **characterized by** a limiter (14) which is slidable along the first guidance (13) between the contact element (10) and the suction cup (1) and is fixable in a position on the first guidance (13) and by an actuating drive (20) connected to the contact element (10) for controlled movement of the contact element (10) into the direction of the level of the opening (3).

2. Suction gripper according to claim 1, **characterized in that** the limiter (14) is fixed in a position along the first guidance (13) and is exchangeable against a further first guidance (13), at which the limiter (14) is fixed in a different position.

3. Suction gripper according to claim 1 or 2, **characterized in that** it is arranged at a feed device for food of a cutting machine having a cutting device and the actuating drive (20) is controlled in dependence on a signal for the distance of the suction gripper from the cutting device.

4. Suction gripper according to one of the preceding claims, **characterized in that** the actuating drive (20) in parallel to the first guidance (13) has a second guidance (21) which guides the contact element (10).

5. Suction gripper according to one of the preceding claims, **characterized in that** the contact element (10) in parallel to the level of the opening (3) has a surface that has openings (12) or is closed.

6. Suction gripper according to one of the preceding claims, **characterized in that** the first guidance (3) is a pivoted bearing or is a rod, longitudinally slidably guided and connected to the contact element (10), and the actuating drive (20) is a piston (23) arranged at the first guidance (13) and guided in a cylinder (22), loadable with pressurised air in a controlled manner, an electric motor driven drive or a spring.

7. Suction gripper according to one of the preceding claims, **characterized in that** a switch (16) is fixed in the path of movement in which the limiter (14) is guided with the first guidance (13) upon movement of the suction cup (1), wherein the switch (16) is adjusted to generate a switching signal.

8. Suction gripper according to claim 7, **characterized in that** the low pressure sorce (4) is controlled in dependence on the switching signal of the switch (16).

9. Suction gripper according to one of claims 7 to 8, **characterized in that** the first guidance (13) is a rod that is longitudinally slidably guided and connected to the contact element (10) and the switch (16) is a plug piece (27) arranged on the rod, the plug piece (27) being guided in a chamber (26) which is loadable with pressurised air, the chamber (26) having a second outlet (28) for pressurised air sealable by the plug piece (27).

10. Suction gripper according to claim 9, **characterized in that** the second outlet (28) is arranged in a position which is closed by the plug piece (27) in the unloaded position of the contact element (10) and which upon movement of the contact element (10) from its unloaded position is released by the plug piece (27).

11. Suction gripper according to claim 9, **characterized in that** the plug piece (27) sealingly covers the cross-section of the chamber (26) and that the second outlet (28) of the chamber (26) is arranged in its section which is connected to the inlet in the unloaded position of the contact element (10).

12. Suction gripper according to claim 11, **characterized in that** the piston (23) has a larger area loadable by pressurised air than the plug piece (27).

13. Suction gripper according to one of the preceding claims, **characterized in that** the opening (3) has a circumferential cutting edge (32) and/or sealing lip.

14. Suction gripper according to one of the preceding claims, **characterized in that** the low pressure source (4) is an end of a pipe section having a bulge in the stream of pressurised air.

15. Suction gripper according to one of the preceding claims, **characterized in that** on the first guidance (13) a fixing device (36) is arranged which is controlled in dependence on the signal of a pressure sensor (35) for the low pressure loading the suction cup (1).

16. Suction gripper according to one of the preceding claims, **characterized by** a blowoff pipe (38), the entrance opening of which is connectable to a pressurised air source and which has an exit opening arranged within the suction cup (1), and a controlled valve.

17. Process for holding a food by means of a suction gripper, **characterized by** the use of a suction gripper according to one of the preceding claims.

## Revendications

1. Ventouse pourvue d'une cloche d'aspiration (1), présentant une ouverture (30) que l'on va disposer contre un aliment, cloche à laquelle une source de dépression (4) peut être connectée, ventouse comportant un élément d'appui (10) guidé à partir d'un plan de l'ouverture (3) le long de la cloche d'aspiration, de façon mobile contre un premier système de guidage (10), **caractérisé par** un limiteur (14) mobile le long du premier système de guidage (13) entre l'élément d'appui (10) et la cloche d'aspiration (1) et pouvant être fixé sur le premier système de guidage (13) dans une position donnée et par un actionneur (20) connecté à l'élément d'appui (10) pour contrôler le mouvement de l'élément d'appui (10) en direction du plan de l'ouverture (3).

2. Ventouse selon la revendication 1, **caractérisée en ce que** le limiteur (14) est bloqué dans une position le long du premier système de guidage (13) et peut être déplacé contre un autre premier système de guidage (13) au niveau duquel le limiteur (14) est bloqué dans une position différente.

3. Ventouse selon les revendications 1 ou 2, **caractérisée en ce qu'**elle est disposée au niveau d'un dispositif d'acheminement pour aliments, dans une machine à découper pourvue d'un appareil de découpe et que l'actionneur (20) est commandé en fonction d'un signal correspondant à la distance entre la ventouse et l'appareil de découpe.

4. Ventouse selon l'une des revendications précédentes, **caractérisé en ce que** l'actionneur (20) présente un second système de guidage (21) parallèle au premier système de guidage (13), pour guider élément d'appui (10).

5. Ventouse selon l'une des revendications précédentes, **caractérisée en ce que** l'élément d'appui (10) présente une surface disposée parallèlement au plan de l'ouverture (3), qui comporte des passages (12) ou bien est fermée.

6. Ventouse selon l'une des revendications précédentes, **caractérisée en ce que** le premier système de guidage (13) est un palier pivotant ou bien une tige guidée dans l'axe longitudinal, connecté à l'élément d'appui (10) et que l'actionneur (20) est un piston (23), disposé au niveau du premier système de guidage (13) et guidé avec précision dans un cylindre (22) commandé par air comprimé, ou bien un entraînement motorisé ou un ressort.

7. Ventouse selon l'une des revendications précédentes, **caractérisée en ce que** la trajectoire de mouvement, dans laquelle est guidé le limiteur (14) avec le premier système de guidage (13) lors du mouvement de la cloche d'aspiration (1), contient un interrupteur (16), prévu pour générer un signal de commande.

8. Ventouse selon la revendication 7, **caractérisée en ce que** la source de dépression (4) est commandée en fonction du signal de commande de l'interrupteur (16).

9. Ventouse selon l'une quelconque des revendications 7 à 8, **caractérisée en ce que** le premier système de guidage (13) est une tige guidée et mobile dans l'axe longitudinal, connectée à l'élément d'appui (10) et que l'interrupteur (16) est un obturateur (27) disposé au niveau de la tige, obturateur guidé dans une chambre (26) soumis à un air comprimé et présentant une seconde sortie (28) pour l'air comprimé, à travers l'obturateur.

10. Ventouse selon la revendication 9, **caractérisée en ce que** la seconde sortie (28) adopte une position qui est fermée hermétiquement par l'obturateur (27) lorsque l'élément d'appui (10) n'est soumis à aucune contrainte et qui est libérée par l'obturateur (27) lorsque l'élément d'appui (10) quitte sa position non contrainte.

11. Ventouse selon la revendication 9, **caractérisée en ce que** l'obturateur (27) recouvre hermétiquement la section transversale de la chambre (26) et que la seconde sortie (28) de la chambre (26) est disposée dans une partie de celle-ci, reliée à l'entrée lorsque l'élément d'appui (10) n'est soumis à aucune contrainte.

12. Ventouse selon la revendication 11, **caractérisée en ce que** le piston présente une surface exposée à l'air comprimée plus grande que l'obturateur (27).

13. Ventouse selon l'une des revendications précédentes, **caractérisée en ce que** l'ouverture (3) présente un bord tranchant (32) et/ou une lèvre d'étanchéité circonférentielle.

14. Ventouse selon l'une des revendications précédentes, **caractérisée en ce que** la source de dépression (4) correspond à une extrémité d'une section tubulaire exposée à l'air comprimée et présentant un bombement.

15. Ventouse selon l'une des revendications précédentes, **caractérisée en ce qu'**un dispositif de blocage (36) est prévu au niveau du premier système de guidage (13), qui est commandé en fonction du signal d'un capteur de pression (35) détectant la dépression au niveau de la cloche d'aspiration (1).

16. Ventouse selon l'une des revendications précédentes, **caractérisée par** un conduit de purge (38), dont l'ouverture d'entrée peut être connectée à une source d'air comprimé et présentant une ouverture de sortie, disposée à l'intérieur de la cloche d'aspiration (1), de même qu'une soupape à commande individuelle.

17. Dispositif de retenue d'un aliment à l'aide d'une ventouse, **caractérisé par** l'utilisation d'une ventouse selon l'une des revendications précédentes.
